# EUROPEAN PATENT APPLICATION

(11) **EP 1 362 781 A1**
(43) Date of publication of application: **19.11.2003**
(21) Application number: 03009699.4
(22) Date of filing: 30.04.2003
(51) Int. Cl.: B62K 25/00

(54) **Bicycle**

(30) Priority: 15.05.2002 IT GE20020039
(71) Applicant: Rosa, Giuseppe, 17047 Vado Ligure (IT)
(72) Inventor: Rosa, Giuseppe, 17047 Vado Ligure (IT)
(74) Representative: Porsia, Attilio, Dr.

(57) **Abstract**

Two-wheeled vehicle, such as a bicycle or the like. It comprises a frame (1) provided in the front with a steering tube (2) into which a head tube (8) having on one end a handlebar (9) and on the other end a support means for the front wheel (11) is inserted, and provided in the back with support means for the rear wheel (13). Said support means for the front (11) and rear (13) wheel comprise each an arm (10,12) carrying on its free end a tubular sleeve (14) housing bearings (15) and a pin (18), whereby said bearings (15) are supporting the rotating movement of the respective pin (18) and said pins (18) are constituting the hubs of the wheels (11) and (13) of the vehicle.

## Description

The present invention relates to bicycles, and in particular to a bicycle whose frame is not provided with front and rear forks, and has instead one upright incorporating on its ends the rotating movement supporting the hub of the wheels, said wheels therefore being without hubs.

Thanks to these features the bicycle according to the invention has several advantages making it quite original.

First of all, the same wheel can be mounted either in the front or in the back. This feature is particularly useful for racing bicycles, since it reduces of 50% the number of spare wheels to be carried during races.

A further advantage consists in that it is possible to change the tire without disassembling the wheel.

Thanks to the fact that the bicycle according to the invention has a front single-arm and rear single-beam frame, its weight is quite small.

Furthermore, the gearbox is independent from the wheel, and the bicycle according to the invention can be advantageously equipped with disk brakes, which are also independent from the wheel.

Moreover, wheels with different diameters can be used on the same frame without making any change to the latter.

The blocking of the wheel onto the hub occurs quite simply with a nut.

Further characteristics and advantages of the bicycle according to the invention will be clearer from the following description referring to the appended drawings, which show as a mere non-limiting example a preferred embodiment of a bicycle according to the invention. In the drawings:
Figure 1 is a global perspective view of a bicycle according to the invention;
Figure 2 shows on an enlarged scale a longitudinal section of the detail concerning the fastening of the front wheel to the hub of the front upright, and
Figure 3 shows on an enlarged scale a longitudinal section of the detail concerning the fastening of the rear wheel to the hub of the rear upright, which also comprises the shifting gear.

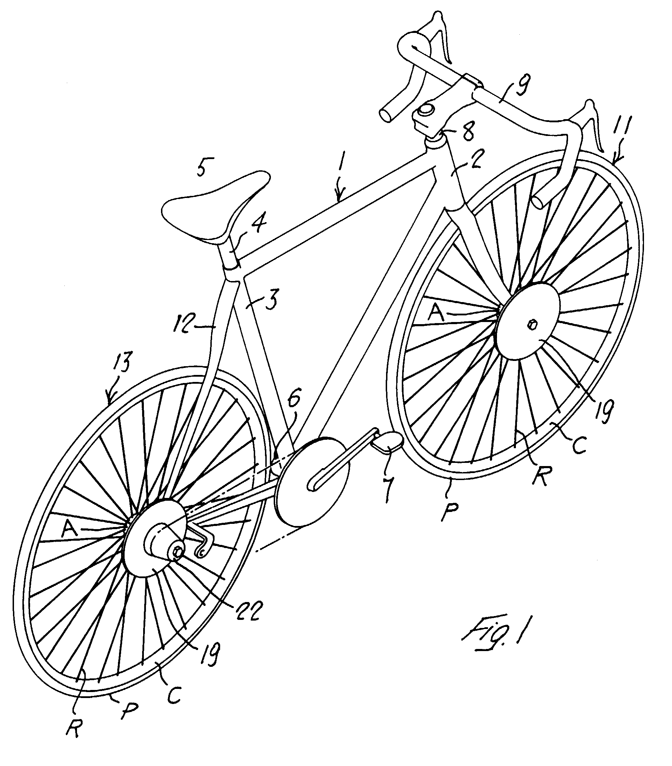

With reference to the drawings, and in particular to Figure 1, the bicycle shown therein comprises - as known per se - the frame 1 comprising in its front side the steering tube 2 and in its rear side the tube 3 into which the tube 4 carrying the saddle 5 fits telescopically. The numeral 6 refers to the bottom bracket bearing surrounding - as known per se - the axis of the pedal cranks 7. The numeral 8 refers to the head tube inserted into the steering tube 2 and carrying on one end the handlebar 9. According to the present invention, a single arm 10 supporting the front wheel 11 is fastened to the other end of the head tube 8 instead of the usual fork. Wholly analogously, the rear portion - instead of comprising a fork - consists of a single beam 12 supporting the rear wheel 13.

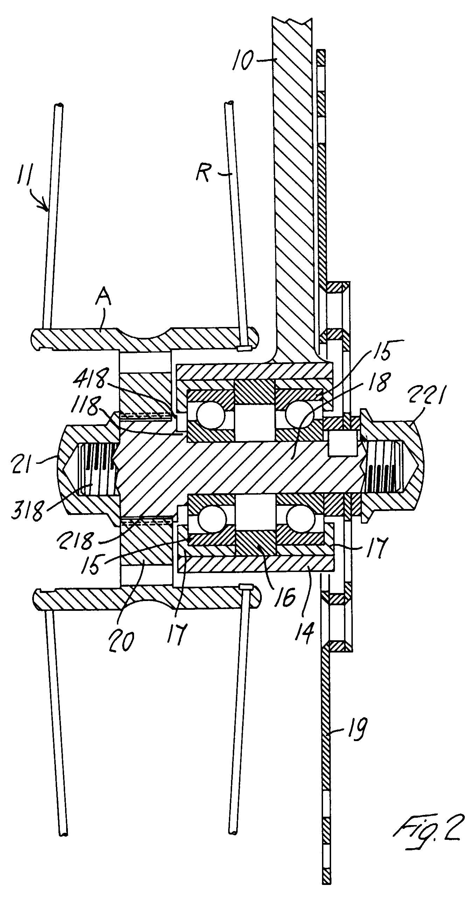

With reference to Figure 2, we shall now describe the system through which the front wheel 11 is secured to the single arm 10.

A tubular sleeve 14 with inner threading, whose axis is orthogonal with respect to the axis of the head tube 2, is fastened to the end of the single arm 10, for instance by welding. Within the sleeve 14 two ball bearings 15 are mounted, separated by a spacing ring 16 and kept in their position by two threaded ring nuts 17 which are screwed onto the corresponding inner threadings of the sleeve 14. The pin 18 constituting the hub of the wheel 11 is fitted on the same axis as the bearings 15. Said pin 18 has on one end a ring-shaped expansion 118, which extends with a portion having a larger diameter 218 and provided on its periphery with ribbed engagement elements, and ends with a threaded portion having a smaller diameter 318. The brake disk 19 is fitted on the other end of said pin 18, and also on this end said pin ends with a threaded portion onto which the nut 221 is screwed.

The wheel 11, which in the case shown is a conventional wheel with spokes R extending between the central ring A and the rim C onto which the tire P is mounted, has - secured to the inner periphery of the central ring A - a ring 20 provided with a central hole whose wall is ribbed in a corresponding way with respect to the portion 218 of the pin 18, so that the ring 20 can be inserted onto the head 218 of the pin 18 until it abuts against a shoulder 418 of the rear end of said head 218, and is then firmly secured to the pin 18 by means of a nut 21 screwed onto the threaded end 318 of said pin.

Obviously, the central ring A and the ring 20 can be advantageously carried out as one piece.

It is evident that the disassembly (and assembly) of the wheel 11 can be carried out fast and easily by simply unscrewing the nut 21, then the wheel can be simply taken off the pin 18. It is also evident that, since no fork is present, the tire P can be replaced without disassembling the wheel 11.

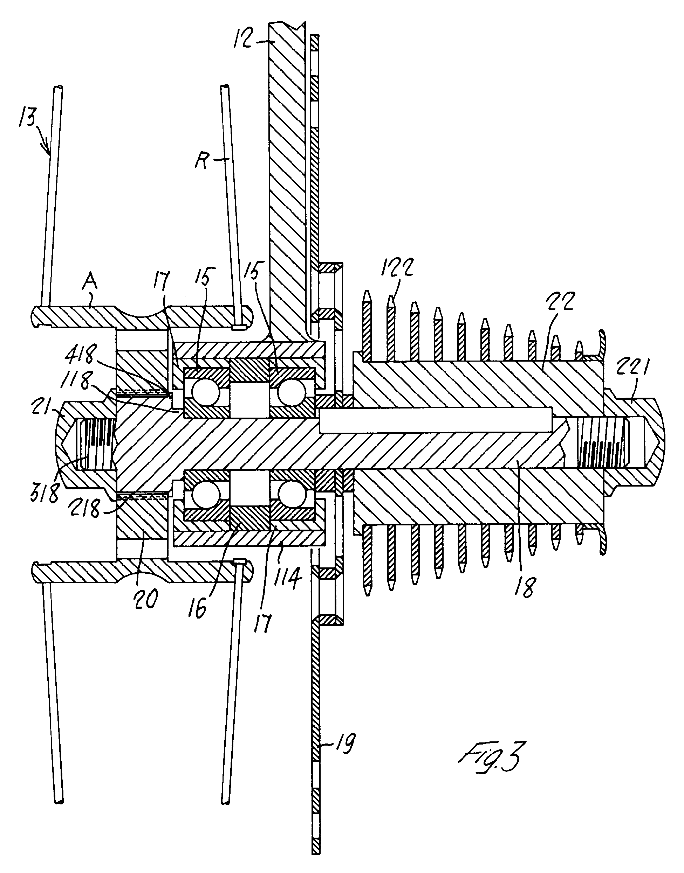

Figure 3 shows the assembly of the rear wheel 13 to the single beam 12, to whose free end the tubular sleeve 114 is secured, which is wholly similar to the sleeve 14 supporting the front wheel 11. The assembly of said wheel is wholly similar to the description made with reference to the front wheel 11, so the same numerals have been used for the same or corresponding parts. The only difference with respect to the description referring to the front wheel is that on the extension of the pin 18, on the opposite side with respect to the one onto which the wheel 13 is mounted, a chain wheel is fitted or, as is shown, the assembly 22 carrying several chain wheels 122 having decreasing diameters, for changing the gear ratio between pedal crank and driving wheel 13.

Obviously, the present invention is not limited to the embodiment shown and described, but comprises all those variants and changes falling within the ampler framework of the inventive idea.

So, for instance, although the two uprights 10 and 12 have been shown as facing the same side of the bicycle frame, they can be carried out so that one faces right and the other left, or vice versa.

Furthermore, it is evident that although we have always referred to a bicycle, the invention can similarly apply to a motorcycle or the like.

Therefore, all those changes made to a two-wheeled vehicle, defined for convenience's sake "bicycle", as claimed later are regarded as falling within the inventive idea.

## Claims

1. Two-wheeled vehicle, such as a bicycle or the like, comprising a frame (1) provided in the front with the steering tube (2) into which the head tube (8) having on one end the handlebar (9) and on the other end the support means for the front wheel (11) is inserted, and provided in the back with the support means for the rear wheel (13), **characterized in that** said support means for the front (11) and rear (13) wheel comprise single arms (10, 12) carrying on their free end tubular sleeves (14) housing the rotating movement supporting the pins (18) constituting the hubs of the wheels (11) and (13) of the two-wheeled vehicle.

2. Vehicle according to claim 1, **characterized in that** said single arms (10, 12) are both arranged on the same side of the frame (1).

3. Vehicle according to claim 1, **characterized in that** said single arms (10, 12) are arranged one on one side and one on the other side of the frame (1).

4. Vehicle according to the preceding claims, **characterized in that** said wheels (11, 13) are provided centrally with a hole-shaped element (20) equipped with engagement means, which can be inserted onto a portion (218) of said pins (18) provided with corresponding engagement means.

5. Vehicle according to any of the preceding claims, **characterized in that** the disk of the disk-braking system are fitted on the end of said pins (18) opposite the one on which the wheels (11, 13) are fastened.

6. Vehicle according to any of the preceding claims, **characterized in that** the chain wheel system driven by the motion driving chain of the vehicle is fitted on the end opposite the one on which the pin (18) of the rear wheel (13) is fastened.

7. Vehicle according to claim 6, in which said chain wheel system comprises several wheels with decreasing diameters belonging to the driving gear.
